Europäisches Patentamt

European Patent Office

Office européen des brevets

(11) Numéro de publication : **0 320 387 B1**

(12) **FASCICULE DE BREVET EUROPEEN**

(45) Date de publication du fascicule du brevet :
27.05.92 Bulletin 92/22

(51) Int. Cl.⁵ : **G01L 9/02**

(21) Numéro de dépôt : **88403118.8**

(22) Date de dépôt : **08.12.88**

(54) **Capteur de mesure de pressions élevées à grande distance.**

(30) Priorité : **11.12.87 FR 8717305**

(43) Date de publication de la demande :
**14.06.89 Bulletin 89/24**

(45) Mention de la délivrance du brevet :
**27.05.92 Bulletin 92/22**

(84) Etats contractants désignés :
**DE GB NL**

(56) Documents cités :
**WO-A-82/03916**
**DE-A- 2 202 105**
**US-A- 3 353 409**
**US-A- 3 424 007**
**US-A- 3 805 620**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Voituriez, Bernard 4, Avenue Albert ler de Belgique F-38000 Grenoble (FR)**

(74) Mandataire : **Mongrédien, André et al c/o BREVATOME 25, rue de Ponthieu F-75008 Paris (FR)**

## Description

La présente invention concerne un capteur pour la mesure de pressions élevées à grande distance.

Plus précisément, l'invention concerne un capteur présentant une grande précision, capable de fonctionner sous une température et une pression élevées (de l'ordre de 250°C et quelques centaines de MPa, respectivement), l'endroit où la mesure de pression doit être effectuée étant situé a une distance de un ou plusieurs kilomètres des opérateurs. Un capteur de ce type s'applique particulièrement à l'industrie pétrolière, a l'océanographie pour la mesure de pressions a grande profondeur, a la géologie, ainsi que, dans l'industrie nucléaire, à la mesure de pressions sous des rayonnements intenses devant être effectuée par des opérateurs situés a grande distance.

Le document de brevet allemand DE-A-2 202 105 décrit une sonde de mesure de pression qui comprend :
– un tube ayant une extrémité ouverte et une extrémité fermée ;
– un piston monté coulissant dans le tube pour délimiter avec l'extrémité fermée de ce tube une chambre de volume variable ;
– un fluide compressible contenu dans ladite chambre de volume variable ;
– des moyens pour mesurer le déplacement du piston relativement au tube comprenant un potentiomètre linéaire comportant une piste reliée au tube et un curseur relié au piston, des fils électriques de connexion reliant le curseur et les extrémités de la piste à des moyens de mesure de la résistance électrique entre le curseur et une des extrémités de la piste.

D'autre part, les documents de brevets US-A-3 805 620 et WO-A-8 203 916 décrivent chacun des moyens différents de compensation de la dilatation.

Le but de l'invention est de proposer une sonde de mesure du type décrit dans le document DE-A-2 202 105, mais ayant des moyens de compensation de la dilatation adaptés.

A cet effet, l'invention concerne un capteur de mesure de pression comprenant :
– un tube ayant une extrémité ouverte et une extrémité fermée ;
– un piston monté coulissant dans le tube pour délimiter avec l'extrémité fermée de ce tube une chambre de volume variable ;
– un fluide compressible contenu dans ladite chambre de volume variable ;
– des moyens pour mesurer le déplacement du piston relativement au tube comprenant un potentiomètre linéaire comportant une piste et un curseur, des fils électriques de connexion reliant le curseur et les extrémités de la piste à des moyens de mesure de la résistance électrique.

Selon l'invention, la piste étant reliée au piston et le curseur étant relié au tube, la résistance électrique est mesurée entre le curseur et chacune des extrémités de la piste, il comprend :
– un moyen pour assurer une étanchéité entre le tube et le piston ;
– des moyens de compensation de la dilatation thermique du fluide compressible comprenant une série de disques bilames reposant au fond de la chambre, un plateau disposé au-dessus de la série de disques, une tige montée sur le plateau, le curseur étant monté à une extrémité de la tige, un élément élastique appliquant le curseur du potentiomètre.

Le potentiomètre comprend, soit un barreau en saphir et une piste d'$In_2O_3$ déposée sur le barreau de saphir, soit un barreau en verre et une piste de $SnO_2$ déposée sur le barreau de verre, ou bien encore une piste bobinée.

De préférence, le fluide est une huile compressible. Dans ce cas, l'huile compressible peut être de marque RHODORSIL, référence 47V100 ou 47V710.

Ainsi, l'utilisation d'un liquide compressible remplace avantageusement les cellules de pression comportant un capteur solide. Elle permet d'éviter l'hystérésis, la fatigue, le fluage, les contraintes, les variations de module d'élasticité des cellules solides utilisées antérieurement.

En outre, l'utilisation d'un liquide compressible pour transformer une pression en un déplacement d'un piston permet une amplification directe et simple de la grandeur à mesurer sans qu'il soit nécessaire de recourir à un mécanisme amplificateur comprenant des pièces fonctionnant avec des jeux et des frottements. Le déplacement du piston en réponse à une variation de pression est infiniment reproductible et réversible en raison des propriétés thermodynamiques de l'huile compressible à condition d'employer cette dernière dans son domaine de stabilité.

En outre, le capteur de l'invention ne nécessite pas d'usinage coûteux ni de traitement thermique et permet une fabrication reproductible.

D'autres caractéristiques et avantages de l'invention apparaitront encore à la lecture de la description qui suit d'exemples de réalisation donnés à titre illustratif et nullement limitatif, en référence aux figures annexées sur lesquelles :
– la figure 1 est une vue en coupe longitudinale d'un premier mode de réalisation d'un capteur conforme à l'invention ;
– la figure 2 est une vue de détail de la partie inférieure du capteur représenté sur la figure 1 et montrant les disques bilames en position écartée ;
– la figure 3 est une vue de la partie supérieure d'une variante de réalisation du capteur de pression représenté sur la figure 1 ;

– la figure 4 illustre une variante de réalisation du soufflet représenté sur la figure 3 ;

– la figure 5 illustre des moyens de mesure du déplacement du piston comportant un potentiomètre bobiné ;

– la figure 6 est un schéma électrique qui illustre le procédé de mesure potentiométrique.

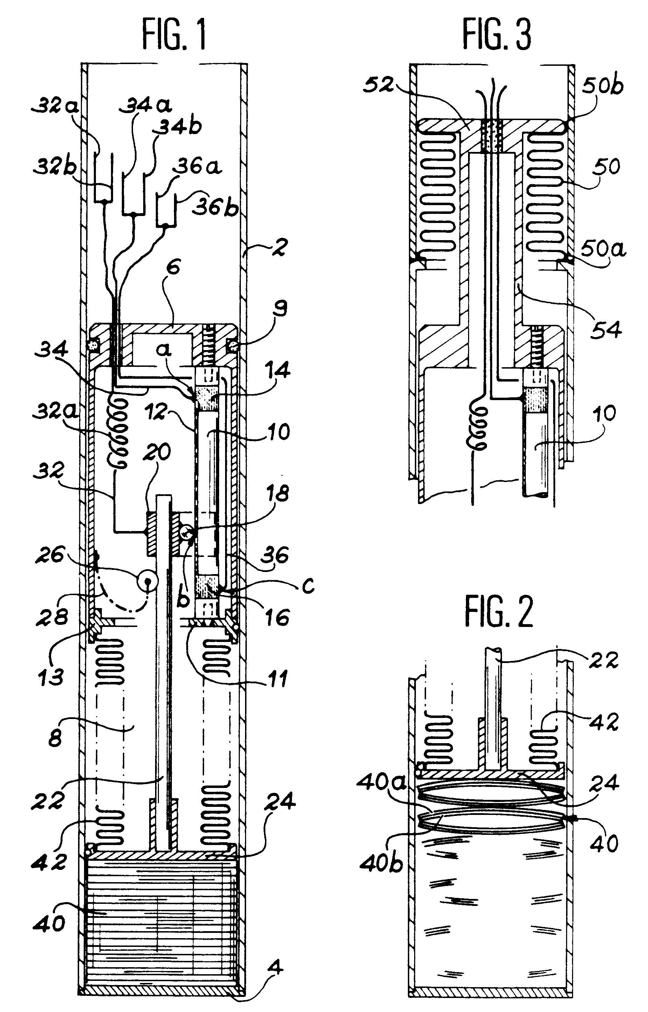

Le capteur représenté sur la figure 1 est constitué d'un tube 2 droit, en acier inoxydable rodé, poli intérieurement. Il est fermé à l'une de ses extrémités par un fond plat 4 soudé au tube. Il est ouvert à son autre extrémité. Un piston 6 est monté coulissant à l'intérieur du tube 2. Un joint d'étanchéité torique 9 assure une étanchéité entre la paroi interne du tube 2 et le piston 6.

De préférence, ce joint 9 est un joint de type PTFE-O'RING en silicone recouvert d'une fine pellicule de Téflon ou de tout joint torique de type Perbunan ou Viton. Avec un joint de cette nature glissant sur un cylindre rodé et glacé intérieurement, on assure un glissement avec un coefficient de frottement très faible, inférieur à 0,05 qui peut être négligé en raison de la lubrification apportée par l'huile contenue dans la chambre 8. En outre, le joint n'est pas détérioré par l'huile. Le joint 9 doit seulement assurer une étanchéité à basse pression étant donné que les pressions de part et d'autre des deux faces du piston sont quasiment égales quelle que soit l'importance de la pression à mesurer. Ceci provient du fait que, dès qu'une différence de pression apparaît entre la face supérieure et la face inférieure du piston, le piston 6 se déplace dans le sens qui permet d'annuler cette différence. De la sorte, la différence de pression entre les deux faces du piston est limitée à celle qui provient des frottements internes des différentes pièces du capteur. Etant donné que la réalisation limite des frottements à des valeurs très faibles, il en résulte que cette différence de pression est minime. Ainsi, le joint 9 est soumis à des efforts très faibles et sa durée de vie est augmentée.

Selon une variante de réalisation représentée sur la figure 3, le joint torique 9 peut être remplacé par un soufflet 50. Ce soufflet est soudé à son extrémité inférieure 50a à la paroi inférieure du tube 2. A son extrémité supérieure 50b, il est raccordé à un disque 52 solidaire d'un cylindre 54 fixé au piston 6. Le soufflet 50 assure l'étanchéité de la chambre 8 tout en permettant le libre coulissement du piston 6 par rapport au tube.

Afin de pouvoir souder l'extrémité 50a (extrémité inférieure selon la figure 3) du soufflet 50 sur la paroi interne du tube 2, ce dernier est réalisé en deux parties. On réalise tout d'abord la soudure du soufflet à la partie inférieure puis on rapporte la partie supérieure du tube et on la soude à la partie inférieure.

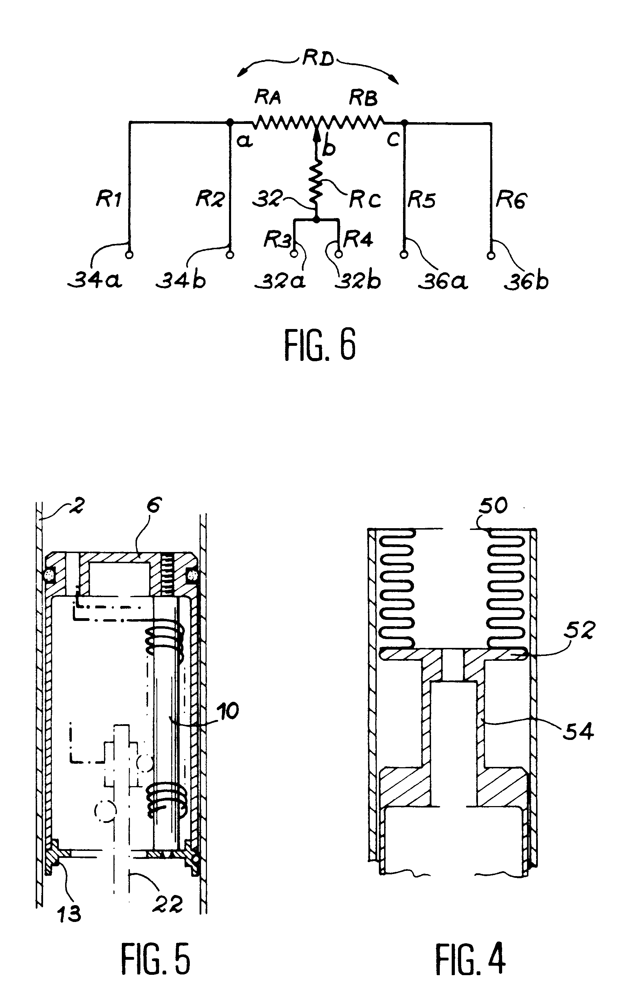

La figure 4 illustre une variante de réalisation du soufflet représentée sur la figure 3. Dans le cas de cette variante, l'extrémité 50a du soufflet 50 est soudée à la partie supérieure du tube 2. Ceci facilite la réalisation dans la mesure où il n'est pas nécessaire de prévoir un tube en deux parties et de les raccorder par un cordon de soudure.

Le piston 6 délimite avec l'extrémité fermée du tube une chambre 8 qui est remplie d'un liquide compressible dégazé. Ce liquide est par exemple une huile de marque Rhodorsil® fabriquée par la Société Rhône-Poulenc portant la référence 47V100 (méthylpolysiloxane) ou 710 (méthylphénylpolysiloxane) qui présente des propriétés lubrifiantes et de stabilité thermique jusqu'à une température de 300°C. Cette huile présente une faible tension de vapeur, une grande inertie chimique et une compressibilité très importante. En effet, son coefficient moyen de compressibilité adiabatique entre 0 et 4 000 bars est de l'ordre de $4,4.10^{-11}cm^2/Dyne$, ce qui correspond à une réduction de volume de 20% à 4 000 bars.

Le principe de fonctionnement de ce capteur est le suivant : lorsque la pression P du milieu dans lequel le capteur est immergé augmente, cette pression est exercée sur la face supérieure du piston 6. En conséquence, le piston 6 se déplace en se rapprochant du fond 4 et la pression dans la chambre 8 augmente, ce qui comprime l'huile qui y est contenue. Au contraire, si la pression P diminue, le piston s'éloigne du fond 4, ce qui détend l'huile contenue dans la chambre 8. En raison de la nature de l'huile, il existe une relation entre la pression à laquelle cette huile est soumise et son volume. Il est donc possible de déduire la pression de la variation du volume de la chambre 8, cette variation étant proportionnelle au déplacement du piston 6 à l'intérieur du tube 2. On prévoit donc, conformément à l'invention, des moyens permettant de mesurer le déplacement du piston 6.

Selon le mode de réalisation préféré représenté sur la figure 1, le déplacement du piston est mesuré au moyen d'un potentiomètre. Selon une réalisation possible, le potentiomètre comprend un barreau 10 sur lequel on a formé une piste métallique 12 de largeur parfaitement constante et deux bagues d'extrémité 14 et 16. Selon une première réalisation, le barreau 10 est en saphir et l'on dépose une couche d'$In_2O_3$. Selon une autre réalisation, le barreau 10 est en saphir et le dépôt 12 en $SnO_2$. La bague supérieure 14 et la bague inférieure 16 forment les arrivées de courant et sont argentées. A son extrémité supérieure, le barreau 10 est fixé au piston 6, et à son extrémité inférieure à un disque 13 qui coulisse dans le tube 2. Un soufflet 42 relie le disque 24 au disque 13 de manière à empêcher une rotation de ce disque 24 et par suite une rotation du curseur 18 par rapport à la piste 12. Ainsi, la translation du curseur se fait d'une façon parallèle au déplacement axial de la piste sans rotation ni flexion des pièces support, interdisant tout jeu ou déplacement aléatoire vers l'avant ou vers l'arrière. Cette caractéristique est très importante pour le suivi fin des fluctuations de pression.

Un curseur 18 est apte à se déplacer le long de la piste 12. A titre d'exemple, le curseur est un cylindre de 2 mm de diamètre en or rouge à 18 carats. Il est soudé sur une bague 20 qui coulisse le long d'une tige 22 disposée parallèlement à l'axe du tube 2. Cette tige est fixée à son extrémité inférieure à un disque 24. Un galet 26 tournant librement autour de son axe est fixé à l'extrémité d'un ressort 28 constitué par exemple par une corde à piano qui l'applique contre la tige 22. L'effort du galet 26 est transmis au curseur 18 qui est ainsi appliqué sur la piste 12 avec un effort de l'ordre de 100 g.

Etant donné la nature des matériaux qui constituent la piste et le curseur, le coefficient de frottement de l'un sur l'autre est de l'ordre de 0,05 et la force transversale nécessaire au déplacement du curseur est très faible, de l'ordre de 5g, départ arrêté. Il va de soi que le potentiomètre décrit, représente seulement un exemple de réalisation. On pourrait en effet utiliser un potentiomètre d'un autre type, par exemple un potentiomètre bobiné (voir figure 5).

Le curseur 18 est relié électriquement à un appareil de mesure par l'intermédiaire d'un fil électrique 32 qui comporte un serpentin 32a qui permet d'absorber le déplacement du curseur par rapport au piston. La bague supérieure 14 est reliée par un fil 34 et la bague inférieure 16 par un fil 36. Les conducteurs 32, 34 et 36 constituent les lignes de remontée du capteur et sont constitués par un câble intégral à gaine inoxydable comportant cinq ou six conducteurs en cuivre isolés par de la magnésie et bouché à sa partie inférieure par un passage spécial étanche.

On a représenté sur la figure 6 un schéma électrique qui illustre les moyens permettant de mesurer à une grande distance la position du curseur du potentiomètre. En effet, le capteur de l'invention est destiné à être utilisé à une distance de 1 à plusieurs kilomètres des opérateurs. Les moyens de mesure de la résistance électrique sont constitués par exemple par un ohmètre à quatre fils raccordé au capteur par des lignes dont la longueur peut atteindre plusieurs kilomètres. Par suite, les résistances en ligne sont très importantes et il est nécessaire de les connaître afin de pouvoir calculer de manière précise la position du curseur et par suite celle du piston 6. Selon un procédé connu, chacun des trois fils 32, 34 et 36 est dédoublé, par exemple après la sortie du piston 6. Le fil 32 qui relie le curseur à l'appareil de mesure est dédoublé en un fil 32a de résistance R3 et un fil 32b de résistance R4. Le fil 34, qui relie l'appareil de mesure à la partie supérieure de la piste du potentiomètre (point a) est dédoublé en un fil 34a et un fil 34b de résistance R1 et R2 respectivement. Le fil 36 qui relie l'extrémité inférieure de la piste du potentiomètre (point c) est dédoublé en un fil 36a et un fil 36b de résistance R5 et R6 respectivement. En outre, on a désigné par Rc la résistance de contact du curseur sur la piste du potentiomètre. RA désigne la résistance de la piste potentiométrique entre le point a et le point b de contact du curseur sur la piste du potentiomètre. RB désigne la résistance de la piste du potentiomètre entre le point de contact b du curseur et le point c de la piste. RD est la somme de RA et RB. Les résistances en ligne entre le point a et le point où le fil 34 est dédoublé, ainsi que la résistance entre le point c et le point où la ligne 36 est dédoublée sont négligeables étant donné que les connexions sont très courtes. Il en va de même en ce qui concerne le fil 32. En outre, selon une variante simplifiée de ce procédé de mesure, il est possible de ne pas dédoubler le fil 32 et de réaliser la mesure avec cinq fils seulement au lieu de six. L'erreur introduite par cette simplification est en effet minime.

La position du curseur par rapport à la piste est parfaitement connue si l'on peut déterminer les résistances RA et RB étant donné que l'on a RA/RB=ab/bc. De manière, connue, on effectue la mesure des résistances suivantes :

R1 + R2 ;
R3 + R4 ;
R5 + R6 ;
R1 + RA + RB + R5 ;
R1 + RA + RB + R6 ;
R2 + RA + RB + R6 ;
R1 + RA + RC + R3 ;
R1 + RA + RC + R4 ;
R5 + RB + RC + R3.

On dispose ainsi d'un système de 9 équations à 9 inconnues. La mesure de ces différentes résistances est effectuée au moyen d'un ohmètre de précision à quatre fils muni d'un système de commutation. Le temps de mesure est inférieur à une seconde. Un microcalculateur permet de résoudre le système d'équations ci-dessus et de déterminer la valeur des résistances RA et RB.

Afin d'assurer la précision de la mesure, il est nécessaire d'effectuer une compensation de la dilatation thermique du fluide compressible contenu dans la chambre 8. En effet, lorsque la température augmente, le fluide, par exemple de l'huile, se dilate plus rapidement que les solides qui le contiennent. Ainsi, l'huile de type Rhodorsil mentionnée précédemment présente une augmentation de volume de 20% lorsque sa température passe de 0°C à 250°C. En conséquence, si le capteur de pression est immergé dans un milieu de température élevée, la dilatation de l'huile entraînera un déplacement du piston 6 vers le haut (selon les figures) dont il doit être tenu compte pour la détermination de la pression. Le capteur comporte donc des moyens de compensation de pression. Ces moyens sont constitués par un empilement de disques 40. Comme on peut le voir plus précisément sur la figure 2, chacun des disques 40 est constitué en fait d'un disque 40a et d'un disque 40b réalisés en des matériaux différents présentant des coefficients de dilatation différents. Le disque 40 est obtenu par découpage dans une tôle bilame (SP108 - Metal Imphy, par exemple). En cas d'augmentation de la température, l'un des disques (40a) se dilate plus que l'autre (40b). Le disque 40 est donc contraint de se courber afin d'accommoder cette différence de dilatation. En conséquence, l'épaisseur de l'empilement de disques 40 augmente, comme on peut le voir sur la figure 2. Il en résulte un déplacement vers le haut du disque 24 et par suite de la tige 22, de la bague 20, et par suite du curseur 18. Ainsi, en cas d'augmentation de la température à laquelle est soumis le capteur, l'augmentation de volume de l'huile contenue dans la chambre 8 provoque un éloignement du piston 6 du fond 4, mais, simultanément, le curseur 18 s'éloigne du fond 4 d'une quantité égale au déplacement du piston 6. La position relative du curseur 18 par rapport à celle du disque reste donc constante, de telle sorte que les variations de température sont automatiquement compensées. Le calcul de la déformation du bilame en fonction de sa sensibilité et du coefficient de Villarceau sont connus de l'homme du métier et ne seront pas décrits en détail. A titre d'exemple, pour un dispositif de compensation de température comportant trente disques et pour une variation de température de 235°C, le déplacement du curseur pourra être de 10 mm.

Ainsi, le capteur de pression de l'invention qui vient d'être décrit présente un faible encombrement et une grande robustesse étant donné qu'il est insensible aux vibrations, aux surpressions et à la corrosion. Il n'est pas sensible aux effets thermiques étant donné que ceux-ci sont compensés automatiquement. Il permet d'effectuer des mesures à très grande distance. Il présente une bonne stabilité et il est d'une réalisation simple.

Il peut trouver des applications dans de très nombreux domaines tels que par exemple l'industrie pétrolière, l'océanographie, la géologie ou les mesures sous rayonnements intenses à grande distance.

## Revendications

1. Capteur de mesure de pression comprenant :
- un tube (2) ayant une extrémité ouverte et une extrémité fermée (4) ;
- un piston (6) monté coulissant dans le tube (2) pour délimiter avec l'extrémité fermée de ce tube une chambre (8) de volume variable ;
- un fluide compressible contenu dans ladite chambre (8) de volume variable ;
- des moyens pour mesurer le déplacement du piston relativement au tube comprenant un potentiomètre linéaire comportant une piste (12) et un curseur (18), des fils électriques de connexion reliant le curseur et les extrémités de la piste à des moyens de mesure de la résistance électrique,

caractérisé en ce que la piste (12) étant reliée au piston (6) et le curseur (18) étant relié au tube (2), la résistance électrique est mesurée entre le curseur (18) et chacune des extrémités de la piste (12) ; et en ce qu'il comprend :
- un moyen (9, 50, 50a, 50b) pour assurer une étanchéité entre le tube (2) et le piston (6) ;
- des moyens de compensation de la dilatation thermique du fluide compressible comprenant une série de disques bilames (40, 40a, 40b) reposant au fond de la chambre, un plateau (24) disposé au-dessus de la série de disques, une tige (22) montée sur le plateau (24), le curseur (18) étant monté à une extrémité de la tige (22), un élément élastique (28) appliquant le curseur (18) du potentiomètre.

2. Capteur selon la revendication 1, caractérisé en ce que le potentiomètre comprend un barreau en saphir et une piste d'$In_2O_3$ déposée sur le barreau de saphir.

3. Capteur selon la revendication 1, caractérisé en ce que le potentiomètre comprend un barreau en verre et une piste de $SnO_2$ déposée sur le barreau de verre.

4. Capteur selon la revendication 1, caractérisé en ce que le potentiomètre comporte une piste bobinée.

5. Capteur selon l'une quelconque des revendications 1 à 4, caractérisé en ce que le fluide est une huile compressible.

6. Capteur de mesure de pression, selon la revendication 5, caractérisé en ce que l'huile compressible est de marque RHODORSIL, référence 47V100 ou 47V710.

## Patentansprüche

1. Wandler zum Messen von Drücken mit:
- einer Röhre (2) mit einem offenen Ende und einem geschlossenen Ende (4);
- einem Kolben (6), der gleitend in der Röhre (2) montiert ist, um mit dem geschlossenen Ende dieser Röhre eine Kammer (8) mit variablem Volumen zu begrenzen;
- einem kompressiblen Fluid, das in dieser Kammer (8) mit variablem Volumen enthalten ist;
- Vorrichtungen zum Messen der Bewegung des Kolbens relativ zur Röhre mit einem linearen Potentiometer mit einer Skala (12) und einem Läufer (18), wobei elektrische Verbindungsdrähte den Läufer und die Enden der Skala mit Meßvorrichtungen für den elektrischen Widerstand verbinden,

dadurch gekennzeichnet, daß die Skala (12) mit dem Kolben (6) verbunden ist und daß der Läufer (18) mit der Röhre (2) verbunden ist, wobei der elektrische Widerstand zwischen dem Läufer (18) und jedem der Enden der Skala (12) gemessen wird;
und daß er umfaßt:

– eine Vorrichtung (9, 50, 50a, 50b) zum Sicherstellen einer Dichtheit zwischen der Röhre (2) und dem Kolben (6);

– Vorrichtungen zum Ausgleich der thermischen Ausdehnung des kompressiblen Fluids mit einer Reihe von zweilamelligen Scheiben (40, 40a, 40b), die am Boden der Kammer ruhen, einer Platte (24), die über der Reihe von Scheiben angeordnet ist, einem Stab (22), der auf der Platte (24) angeordnet ist, wobei der Läufer (18) an einem Ende des Stabs (22) montiert ist, wobei ein elastisches Element (28) den Läufer (18) des Potentiometers anlegt.

2. Wandler nach Anspruch 1, dadurch gekennzeichnet, daß das Potentiometer einen Saphirstab und eine auf dem Saphirstab angebrachte Skala aus $In_2O_3$ aufweist.

3. Wandler nach Anspruch 1, dadurch gekennzeichnet, daß das Potentiometer einen Glasstab und eine auf dem Glasstab angebrachte Skala aus $SnO_2$ aufweist.

4. Wandler nach Anspruch 1, dadurch gekennzeichnet, daß das Potentiometer eine gewickelte Skala aufweist.

5. Wandler nach einem der Ansprüche 1 bis 4, dadurch gekennzeichnet, daß das Fluid ein kompressible Öl ist.

6. Wandler zum Messen von Drücken nach Anspruch 5, dadurch gekennzeichnet, daß das kompressible Öl von der Marke RHODORSIL, Referenz 47V100 oder 47V710 ist.

## Claims

1. Pressure measuring sensor including:
– a tube (2) having an open end and a closed end (4);
– a piston (6) mounted slidably in the tube (2) in order to demarcate with the closed end of this tube a chamber (8) of variable volume;
– a compressible fluid contained in the said chamber (8) of variable volume;
– means for measuring the displacement of the piston relative to the tube including a linear potentiometer comprising a track (12) and a slider (18), electrical connection leads connecting the slider and the ends of the track to means of measuring electrical resistance,
characterised in that the track (12) being connected to the piston (6), and the slider (18) being connected to the tube (2), the electrical resistance is measured between the slider (18) and each of the ends of the track (12);
and in that it includes:
– a means (9, 50, 50a, 50b) of ensuring sealing between the tube (2) and the piston (6);
– means of compensating for the thermal expansion of the compressible fluid including a series of two-leaf discs (40, 40a, 40b) resting on the bottom of the chamber, a platen (24) arranged above the series of discs, a rod (22) mounted on the platen (24), the slider (18) being mounted at one end of the rod (22), an elastic element (28) applying the slider (18) of the potentiometer.

2. Sensor according to Claim 1, characterised in that the potentiometer includes a sapphire bar and an $In_2O_3$ track deposited on the sapphire bar.

3. Sensor according to Claim 1, characterised in that the potentiometer includes a glass bar and an $SnO_2$ track deposited on the glass bar.

4. Sensor according to Claim 1, characterised in that the potentiometer comprises a coiled track.

5. Sensor according to any one of Claims 1 to 4, characterised in that the fluid is a compressible oil.

6. Pressure measuring sensor, according to Claim 5, characterised in that the compressible oil is the RHODORSIL brand, reference 47V100 or 47V710.

FIG. 1

FIG. 3

FIG. 2

FIG. 6

FIG. 5

FIG. 4